# EUROPÄISCHE PATENTSCHRIFT

(11) **EP 4 144 597 B1**
(45) Veröffentlichungstag und Bekanntmachung des Hinweises auf die Patenterteilung: **26.02.2025**
(21) Anmeldenummer: 22196582.5
(22) Anmeldetag: 15.10.2019
(51) Int. Cl.: B60R 22/26, B60N 2/68

(54) **FAHRZEUGSITZSTRUKTUR SOWIE VERFAHREN ZUR MONTAGE EINER FAHRZEUGSITZSTRUKTUR**
VEHICLE SEAT STRUCTURE AND METHOD FOR ASSEMBLING VEHICLE SEAT STRUCTURE
STRUCTURE DE SIÈGE DE VÉHICULE ET PROCÉDÉ DE MONTAGE D'UNE STRUCTURE DE SIÈGE DE VÉHICULE

(30) Priorität: 22.10.2018 DE 102018126207
(43) Veröffentlichungstag der Anmeldung: 08.03.2023
(62) Teilanmeldung aus: 19797984.2
(73) Patentinhaber: Adient US LLC, Plymouth, MI 48170 (US)
(72) Erfinder: MÜHLENBROCK, Ludger, 45665 Recklinghausen (DE); MÜLLER, Toralf, 53809 Ruppichteroth (DE); SCHAFFERT, Tobias, 42653 Solingen (DE); TUPUSCHIES, Klaus, 45470 Muehlheim (DE)
(74) Vertreter: Liedhegener, Ralf

(56) Entgegenhaltungen:
- EP-A1- 2 644 444
- DE-T2- 69 501 759
- FR-A3- 3 034 062
- GB-A- 2 435 244
- US-A- 3 091 496
- US-A- 5 934 760
- US-A1- 2008 116 679

## Beschreibung

Die Erfindung betrifft eine Fahrzeugsitzstruktur für einen Fahrzeugsitz, mit einem einen Gurtautomaten aufweisenden Strukturbauteil, sowie ein Verfahren zur Montage einer solchen Fahrzeugsitzstruktur.

### Stand der Technik

Aus der DE 10 2012 022 159 A1 ist eine Rückenlehnenstruktur für einen Fahrzeugsitz bekannt, insbesondere für eine klappbare Rückenlehne einer Rücksitzanlage eines Kraftfahrzeuges, wobei die Rückenlehnenstruktur einen Einbauschacht umfasst, in den ein Gurtautomat einsetzbar ist. Bei der Montage des Fahrzeugsitzes wird der Gurtautomat nach Fertigung der Rückenlehnenstruktur von oben in den Einbauschacht eingesetzt.

Aus der DE 695 01 759 T2 ist eine Fahrzeugsitzstruktur bekannt, mit einer einen Gurtautomaten aufweisenden Strukturbauteil, wobei der Gurtautomat in einem Hohlraum des Strukturbauteils angeordnet ist, und das Strukturbauteil formschlüssig über Anschlussmittel mit einem weiteren Bauteil der Fahrzeugsitzstruktur verbunden ist, wobei die Fahrzeugsitzstruktur eine Rückenlehnenstruktur aufweist, die Rückenlehnenstruktur aufweisend eine erste seitliche Strebe und eine zweite seitliche Strebe, wobei das den Gurtautomaten aufweisende Strukturbauteil die beiden Streben miteinander verbindet.

Die EP 2 644 444 A1 offenbart eine Fahrzeugsitzstruktur für einen Fahrzeugsitz gemäß dem Oberbegriff des Anspruchs 1, mit einem einen Gurtautomaten aufweisenden Gehäuse, wobei der Gurtautomat in einem Hohlraum des Gehäuses angeordnet ist, und das Gehäuse an einer Sitzunterbaustruktur befestigt ist. Das Gehäuse ist in einer Querrichtung ausgerichtet und unterhalb einer Rückenlehne an der Sitzunterbaustruktur angeordnet.

Die FR 3 034 062 A3 offenbart einen Fahrzeugsitz, umfassend einen Sitzrahmen, eine an dem Sitzrahmen befestigte Rückenlehne, und eine Konsole zur schwenkbaren Befestigung des Sitzrahmens an einer Fahrzeugkarosserie. Der Sitzrahmen ist um eine Schwenkachse relativ zu der Konsole schwenkbar. Die Konsole ist fest mit der Fahrzeugkarosserie verbindbar. Ein Gurtautomat eines Sicherheitsgurtsystems des Fahrzeugsitzes ist fest mit der Konsole verbunden, so dass der Sitzrahmen schwenkbar zum Gurtautomaten ist.

Fahrzeugsitzstrukturen, mit einem einen Gurtautomaten aufweisenden Strukturbauteil, wobei der Gurtautomat in einem Hohlraum des Strukturbauteils angeordnet ist, und das Strukturbauteil mit einem weiteren Bauteil der Fahrzeugsitzstruktur verbunden ist, sind zudem jeweils aus der US 3 091 496 A und der US 5 934 760 A bekannt.

### Aufgabe

Der Erfindung liegt die Aufgabe zu Grunde, einen Fahrzeugsitz der eingangs genannten Art zu verbessern, insbesondere die Integration eines Gurtautomaten in die Fahrzeugsitzstruktur hinsichtlich des benötigten Bauraums und des Kraftflusses zu optimieren. Insbesondere soll auch ein kostengünstiges Montagverfahren für einen solchen Fahrzeugsitz bereitgestellt werden.

### Lösung

Diese Aufgabe wird erfindungsgemäß durch eine Fahrzeugsitzstruktur für einen Fahrzeugsitz gemäß Anspruch 1 gelöst, mit einem einen Gurtautomaten aufweisenden Strukturbauteil wobei der Gurtautomat in einem Hohlraum des Strukturbauteils angeordnet ist, und das Strukturbauteil formschlüssig und/oder stoffschlüssig und/oder kraftschlüssig mit wenigstens einem weiteren Bauteil der Fahrzeugsitzstruktur verbunden ist, wobei die Fahrzeugsitzstruktur eine Sitzunterbaustruktur aufweist, wobei das den Gurtautomaten aufweisende Strukturbauteil ein Bauteil der Sitzunterbaustruktur bildet.

Unter einem Strukturbauteil und einem weiteren Bauteil der Fahrzeugsitzstruktur ist jeweils ein lasttragendes Bauteil der Fahrzeugsitzstruktur zu verstehen. Eine wesentliche Funktion des Strukturbauteils und des weiteren Bauteils der Fahrzeugsitzstruktur ist es somit die für eine bestimmungsgemäße Nutzung des Fahrzeugsitzes, insbesondere aber auch für einen Crashfall, notwendige Steifigkeit und Festigkeit der Fahrzeugsitzstruktur zu gewährleisten. Demgegenüber haben beispielsweise Polsterteile und Blenden in der Regel keine lasttragende Funktion.

Dadurch, dass das Strukturbauteil einen Hohlraum aufweist, wobei der Gurtautomat in dem Hohlraum angeordnet ist und das Strukturbauteil formschlüssig und/oder stoffschlüssig und/oder kraftschlüssig mit wenigstens einem weiteren Bauteil der Fahrzeugsitzstruktur verbunden ist, ist die Integration des Gurtautomaten in die Fahrzeugsitzstruktur hinsichtlich des benötigten Bauraums und des Kraftflusses optimiert.

Das den Gurtautomaten aufweisende Strukturbauteil bildet ein Sitzrahmenseitenteil der Sitzunterbaustruktur.

In dem Strukturbauteil kann ein Gurtautomat zum Aufrollen eines Beckengurtes eines Gurtsystems angeordnet sein. Das Gurtsystem kann als ein 3-Punkt-Gurtsystem ausgebildet sein. Das Gurtsystem kann ein Sicherheitsgurtsystem sein.

Das Gurtsystem kann einen zweiten Gurtautomaten im Bereich einer Rückenlehne aufweisen. Die Fahrzeugsitzstruktur kann sowohl ein Strukturbauteil mit einen Gurtautomaten zum Aufrollen eines Beckengurtes eines Gurtsystems aufweisen, als auch ein weiteres Strukturbauteil mit einen Gurtautomaten zum Aufrollen eines Schultergurtes aufweisen. Die beiden Gurtautomaten können Bestandteile genau eines 3-Punkt-Gurtsystems sein.

Vorzugsweise weist die Fahrzeugsitzstruktur eine Rückenlehnenstruktur auf. Die Rückenlehnenstruktur kann einen ersten Seitenholm und einen zweiten Seitenholm aufweisen. Wenigstens einer der beiden Seitenholme kann aus einem ersten Seitenholmprofil und wenigstens einem zweiten Seitenholmprofil zusammengesetzt sein. Vorzugsweise bilden die Seitenholmprofile einen Seitenholm mit einem weitgehend geschlossenen Profil. Ein geschlossenes Profil hat eine hohe Steifigkeit und kann hohe Gurtlasten ableiten.

In einem Strukturbauteil kann ein Gurtautomat zum Aufrollen eines Schultergurtes eines Gurtsystems angeordnet sein. Das Gurtsystem kann ein 3-Punkt-Gurtsystems sein.

Die Rückenlehnenstruktur kann mit der Sitzunterbaustruktur fest verbunden sein. Die Rückenlehnenstruktur kann mittels wenigstens eines Beschlags schwenkbar an der Sitzunterbaustruktur angelenkt sein. Das einen Gurtautomaten aufweisendes Strukturbauteil bildet ein Bauteil der Sitzunterbaustruktur. Das den Gurtautomaten aufweisende Strukturbauteil ist ein Sitzrahmenseitenteil der Sitzunterbaustruktur. In dem Strukturbauteil kann ein Gurtautomat zum Aufrollen eines Beckengurtes eines Gurtsystems angeordnet sein. Das Gurtsystem kann ein 3-Punkt-Gurtsystem sein. Die Fahrzeugsitzstruktur kann sowohl ein Strukturbauteil mit einen Gurtautomaten zum Aufrollen eines Schultergurtes als auch ein weiteres Strukturbauteil mit einen Gurtautomaten zum Aufrollen eines Beckengurtes eines Gurtsystems aufweisen. Die beiden Gurtautomaten können Bestandteil genau eines 3-Punkt-Gurtsystems sein.

Die Aufgabe wird zudem gelöst durch ein Verfahren zur Montage einer erfindungsgemäßen Fahrzeugsitzstruktur, bei dem in einem Verfahrensschritt das den Gurtautomaten aufweisende Strukturbauteil und die beiden Seitenholme relativ zueinander verschoben werden, so dass das Strukturbauteil und die beiden Seitenholme eine Endlage zueinander einnehmen, und das Strukturbauteil und die beiden Seitenholme in einem weiteren Verfahrensschritt miteinander verschraubt werden.

Dadurch, dass in einem Verfahrensschritt das Strukturbauteil und die beiden Seitenholme relativ zueinander verschoben werden, so dass das Strukturbauteil und das wenigstens eine weitere Bauteil der Fahrzeugsitzstruktur ihre Endlage zueinander einnehmen und in einem weiteren Verfahrensschritt miteinander verschraubt werden, ist ein kostengünstiges Montagverfahren für einen solchen Fahrzeugsitz bereitgestellt.

Das den Gurtautomaten aufweisende Strukturbauteil ist vorzugsweise eine prüffähige Einheit. Die Funktion des den Gurtautomaten aufweisenden Strukturbauteils kann vor der Verbindung des den Gurtautomaten aufweisenden Strukturbauteils mit dem wenigstens einen weiteren Bauteil der Fahrzeugsitzstruktur überprüft werden. Insbesondere die Funktion des Gurtautomaten kann überprüft werden. Dies hat den Vorteil, dass defekte Strukturbauteile und defekte Gurtautomaten frühzeitig erkannt werden können und somit die Qualitätskosten reduziert werden können.

Die Fahrzeugsitzstruktur kann ein Anschlagmittel, insbesondere eine Anschlagfläche, aufweisen. Das den Gurtautomaten aufweisende Strukturteil kann während des Montageverfahrens beim Erreichen der Endlage gegen das Anschlagmittel anlaufen.

Es ist eine Möglichkeit geschaffen, ein Strukturbauteil, aufweisend einen Gurtautomaten, translatorisch und/oder rotatorisch entweder von oben und/oder von vorne und/oder von hinten und/oder in Richtung eines oberen Bereichs des Fahrzeugsitzes und/oder in Richtung eines unteren Bereichs des Fahrzeugsitzes einer Unterbaugruppe der Fahrzeugsitzstruktur zuzuführen und mit dieser zu verbinden. Die Fixierung ist vorzugsweise derart gestaltet, dass Toleranzen beseitigt werden können und Spiel sowie Klappergeräusche vermieden werden. Das Montageverfahren umfasst vorzugsweise das Ausführen einer Verbindung des Strukturbauteils mit dem darin angeordneten Gurtautomaten an wenigstens ein weiteres Bauteil der Fahrzeugsitzstruktur mittels wenigstens einer Schraube und/oder wenigstens eines Niets und/oder wenigstens einer Tox-Verbindung und/oder wenigstens einer Clipsverbindung und/oder eines Überpressens und/oder eines Klebens und/oder eines Schweißens. Auch ein Formschluss kann Bestandteil der Montage sein.

An dem erfindungsgemäß ausgebildeten Strukturbauteil können eine oder mehrere Kopfstützen befestigt werden. Eine Kopfstütze kann durch Verschrauben und/oder Nieten und/oder Verschweißen an dem Strukturbauteil befestigt werden. Insbesondere Rohre für eine Standard-Kopfstütze können mit dem Strukturbauteil verbunden werden. Aber auch eine Kopfstütze mit einer Höheneinstellung innerhalb der Kopfstütze oder eine integrierte Kopfstütze können derart befestigt werden. Auch Federmatten, Lautsprecher, Fond-Entertainment oder andere komplette Sitzteile können an dem Strukturbauteil, aufweisend den Gurtautomaten, montiert werden. Zusätzliche Funktionen, beispielsweise ein Airbag-Inflator für einen insbesondere entfernt gelegenen Seitenairbag kann innerhalb des Strukturbauteils montiert werden.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: ein Strukturbauteil mit einem darin angeordneten Gurtautomaten,
- Fig. 2:: eine perspektivische Ansicht einer Rückenlehnenstruktur einer Fahrzeugsitzstruktur von schräg vorne gemäß eines nicht erfindungsgemäßen ersten Ausführungsbeispiels, bei dem ein Strukturbauteil mit einem darin angeordneten Gurtautomaten eine obere Quertraverse der Rückenlehnenstruktur bildet,
- Fig. 3:: ausschnittsweise eine perspektivische Ansicht einer Rückenlehnenstruktur einer Fahrzeugsitzstruktur von schräg vorne gemäß eines nicht erfindungsgemäßen zweiten Ausführungsbeispiels, bei dem ein Strukturbauteil mit einem darin angeordneten Gurtautomaten eine obere Quertraverse der Rückenlehnenstruktur bildet,
- Fig. 4:: einen Schnitt entlang der Linie IV - IV in Fig. 3,
- Fig. 5:: ausschnittsweise eine perspektivische Ansicht einer Rückenlehnenstruktur einer Fahrzeugsitzstruktur von schräg vorne gemäß eines nicht erfindungsgemäßen dritten Ausführungsbeispiels, bei dem ein Strukturbauteil mit einem darin angeordneten Gurtautomaten eine obere Quertraverse der Rückenlehnenstruktur bildet,
- Fig. 6:: einen Schnitt entlang der Linie VI - VI in Fig. 5,
- Fig. 7:: ausschnittsweise eine Vorderansicht einer Fahrzeugsitzstruktur gemäß eines nicht erfindungsgemäßen vierten Ausführungsbeispiels während der Montage einer Rückenlehnenstruktur, wobei ein Strukturbauteil mit einem darin angeordneten Gurtautomaten um eine Längsrichtung relativ zu zwei Seitenholmen der Rückenlehnenstruktur in Richtung einer Endlage geschwenkt wird,
- Fig. 8:: ausschnittsweise eine Vorderansicht der Rückenlehnenstruktur aus Fig. 7, wobei das Strukturbauteil mit dem darin angeordneten Gurtautomaten weiter in Richtung einer Endlage geschwenkt ist,
- Fig. 9:: ausschnittsweise eine Vorderansicht der Rückenlehnenstruktur aus Fig. 7 in einem montierten Zustand,
- Fig. 10:: ausschnittsweise eine Vorderansicht der Fahrzeugsitzstruktur gemäß eines nicht erfindungsgemäßen fünften Ausführungsbeispiels während der Montage einer Rückenlehnenstruktur, wobei ein Strukturbauteil mit einem darin angeordneten Gurtautomaten entgegen einer Vertikalrichtung in Richtung einer Endlage bewegt wird,
- Fig. 11:: ausschnittsweise eine Vorderansicht der Fahrzeugsitzstruktur gemäß eines nicht erfindungsgemäßen sechsten Ausführungsbeispiels während der Montage einer Rückenlehnenstruktur, wobei ein Strukturbauteil mit einem darin angeordneten Gurtautomaten schräg zu einer Vertikalrichtung in Richtung einer Endlage bewegt wird,
- Fig. 12:: ausschnittsweise eine Vorderansicht der Fahrzeugsitzstruktur gemäß eines nicht erfindungsgemäßen siebten Ausführungsbeispiels während der Montage einer Rückenlehnenstruktur, wobei ein Strukturbauteil mit einem darin angeordneten Gurtautomaten entgegen einer Querrichtung in Richtung einer Endlage bewegt wird,
- Fig. 13:: ausschnittsweise eine Vorderansicht der Fahrzeugsitzstruktur gemäß eines nicht erfindungsgemäßen achten Ausführungsbeispiels während der Montage einer Rückenlehnenstruktur, wobei ein Strukturbauteil mit einem darin angeordneten Gurtautomaten in Querrichtung in Richtung einer Endlage bewegt wird,
- Fig. 14:: ausschnittsweise eine Seitenansicht der Fahrzeugsitzstruktur gemäß eines nicht erfindungsgemäßen neunten Ausführungsbeispiels während der Montage einer Rückenlehnenstruktur, wobei ein Strukturbauteil mit einem darin angeordneten Gurtautomaten in Längsrichtung x in Richtung einer Endlage bewegt wird,
- Fig. 15:: ausschnittsweise eine Ansicht von oben auf die Fahrzeugsitzstruktur gemäß eines nicht erfindungsgemäßen zehnten Ausführungsbeispiels während der Montage einer Rückenlehnenstruktur, wobei ein Strukturbauteil mit einem darin angeordneten Gurtautomaten um die Vertikalrichtung in Richtung einer Endlage geschwenkt,
- Fig. 16:: eine Ansicht von vorne in Explosionsdarstellung einer Rückenlehnenstruktur einer Fahrzeugsitzstruktur gemäß eines nicht erfindungsgemäßen elften Ausführungsbeispiels,
- Fig. 17:: ausschnittsweise eine perspektivische Ansicht von schräg vorne der Rückenlehnenstruktur einer Fahrzeugsitzstruktur gemäß eines nicht erfindungsgemäßen zwölften Ausführungsbeispiels, bei dem ein Strukturbauteil mit einem darin angeordneten Gurtautomaten eine untere Quertraverse der Rückenlehnenstruktur bildet,
- Fig. 18:: eine Seitenansicht der Rückenlehnenstruktur aus Fig. 17,
- Fig. 19:: ausschnittsweise eine Vorderansicht der Rückenlehnenstruktur einer Fahrzeugsitzstruktur gemäß eines nicht erfindungsgemäßen dreizehnten Ausführungsbeispiels, bei dem ein Strukturbauteil mit einem darin angeordneten Gurtautomaten einen Teil eines Seitenholms der Rückenlehnenstruktur bildet,
- Fig. 20:: ausschnittsweise eine Seitenansicht der Rückenlehnenstruktur aus Fig. 19,
- Fig. 21:: ausschnittsweise eine perspektivische Ansicht von schräg vorne einer Fahrzeugsitzstruktur gemäß eines erfindungsgemäßen vierzehnten Ausführungsbeispiels, bei dem ein Strukturbauteil mit einem darin angeordneten Gurtautomaten ein Seitenteil einer Sitzunterbaustruktur verstärkt,
- Fig. 22:: eine Seitenansicht der Fahrzeugsitzstruktur aus Fig. 21,
- Fig. 23:: ausschnittsweise eine Rückansicht einer Rückenlehnenstruktur einer Fahrzeugsitzstruktur gemäß eines nicht erfindungsgemäßen fünfzehnten Ausführungsbeispiels, bei dem ein Strukturbauteil mit einem darin angeordneten Gurtautomaten eine obere Quertraverse der Rückenlehnenstruktur bildet,
- Fig. 24:: ausschnittsweise eine perspektivische Ansicht der Rückenlehnenstruktur aus Fig. 23 von schräg vorne,
- Fig. 25:: ausschnittsweise eine Vorderansicht einer Fahrzeugsitzstruktur gemäß eines nicht erfindungsgemäßen sechzehnten Ausführungsbeispiels während der Montage einer Rückenlehnenstruktur, wobei ein Strukturbauteil mit einem darin angeordneten Gurtautomaten entgegen einer Vertikalrichtung in Richtung einer Endlage bewegt wird,
- Fig. 26:: ausschnittsweise eine perspektivische Ansicht der Rückenlehnenstruktur aus Fig. 25 von schräg vorne, und
- Fig. 27:: einen Schnitt entlang der Linie XXVII - XXVII in Fig. 26.

Vergleichbare Bauteile tragen in den Ausführungsbeispielen jeweils gleiche Bezugszeichen.

Eine Fahrzeugsitzstruktur 100 eines Fahrzeugsitzes für ein Kraftfahrzeug weist eine Sitzunterbaustruktur 102 und eine relativ zu der Sitzunterbaustruktur 102 in ihrer Neigung einstellbare Rückenlehnenstruktur 104 auf, die mittels eines Beschlags 106, vorzugsweise mittels zweier Beschläge 106, neigungseinstellbar an der Sitzunterbaustruktur 102 befestigt ist. Der Fahrzeugsitz umfasst die Fahrzeugsitzstruktur 100, mehrere die Fahrzeugsitzstruktur 100 abdeckende Polster- und Blendenteile sowie weitere Anbauteile, wie beispielsweise eine Kopfstütze. Der Fahrzeugsitz umfasst zudem ein Sicherheitsgurtsystem, insbesondere ein 3-Punkt-Gurtsystem, aufweisend wenigstens einen Gurtautomaten 108. Der Gurtautomat 108 hat insbesondere die Funktion eines Gurtaufrollers, der ein Gurtband 110 des Sicherheitsgurtsystems auf- und abrollt. In einem Crashfall wird ein Abrollen des Gurtbandes 110 durch einen Mechanismus des Gurtautomaten 108 automatisch gesperrt.

Die Fahrzeugsitzstruktur 100 wird nachfolgend unter Verwendung von drei senkrecht zueinander verlaufenden Raumrichtungen beschrieben. Eine Längsrichtung x verläuft bei einem im Kraftfahrzeug eingebauten Fahrzeugsitz weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz sitzenden Insassen in normaler Sitzposition, wobei der Fahrzeugsitz im Fahrzeug eingebaut, in einer zur Personenbeförderung geeigneten Gebrauchsposition mit einer aufrecht stehenden Rückenlehne und wie üblich in Fahrtrichtung ausgerichtet ist. Der Fahrzeugsitz kann jedoch auch in abweichender Ausrichtung, beispielsweise quer zur Fahrtrichtung verbaut werden.

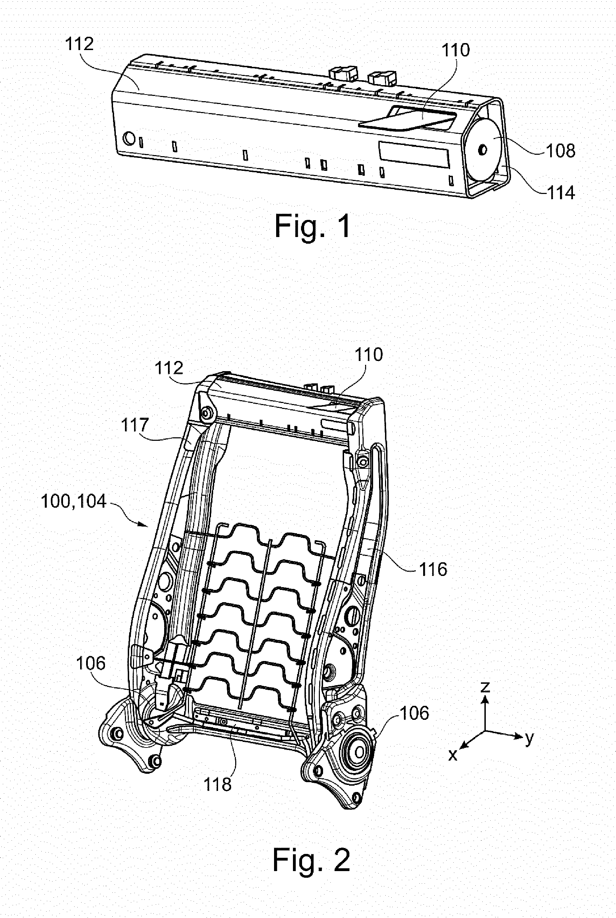

Figur 1 zeigt ein Strukturbauteil 112 einer Fahrzeugsitzstruktur 100 gemäß eines ersten Ausführungsbeispiels. Der Gurtautomat 108 ist in das Strukturbauteil 112 integriert. Der Gurtautomat 108 ist vorzugsweise in einem Hohlraum 114 des Strukturbauteils 112 angeordnet. Das Strukturbauteil 112 bildet mit dem darin ngeordneten Gurtautomaten 108 eine prüffähige Einheit, die insbesondere vor einer Montage des Strukturbauteils 112 an weitere Bauteile der Fahrzeugsitzstruktur 100 auf Funktion geprüft werden kann. Der Gurtautomat 108 ist vorzugsweise fest mit dem Strukturbauteil 112 verbunden, vorzugsweise verschraubt. Das Strukturbauteil 112 kann ein wesentliches Bauteil des Gurtautomaten 108 sein, beispielsweise ein Gehäusebauteil des Gurtautomaten 108 bilden. Das Strukturbauteil 112 ist vorliegend ein Profilrohr, vorzugsweise zusammengesetzt aus wenigstens zwei insbesondere profilierten Blechen.

Figur 2 zeigt eine Rückenlehnenstruktur 104 der Fahrzeugsitzstruktur 100 des ersten Ausführungsbeispiels, bei dem ein Strukturbauteil 112 mit einem darin angeordneten Gurtautomaten 108 eine obere Quertraverse der Rückenlehnenstruktur 104 bildet.

Die Rückenlehnenstruktur 104 weist zwei in Querrichtung y zueinander versetzt angeordnete Seitenholme 116, 117 auf. Der erste Seitenholm 116 und der zweite Seitenholm 117 verlaufen vorzugsweise weitgehend parallel zur Vertikalrichtung z. Ein Abstand zwischen den beiden Seitenholme 116, 117 in Querrichtung y entspricht annähernd der Breite der Rückenlehnenstruktur 104, wobei die Beschläge 106 bei dieser Betrachtung außen vor bleiben. Die beiden Seitenholme 116, 117 sind in einem unteren Bereich der Rückenlehnenstruktur 104 mittels einer parallel zur Querrichtung y verlaufenden unteren Quertraverse 118 verbunden. Die beiden Seitenholme 116, 117 sind zudem in einem oberen Bereich der Rückenlehnenstruktur 104 mittels des Strukturbauteils 112 verbunden.

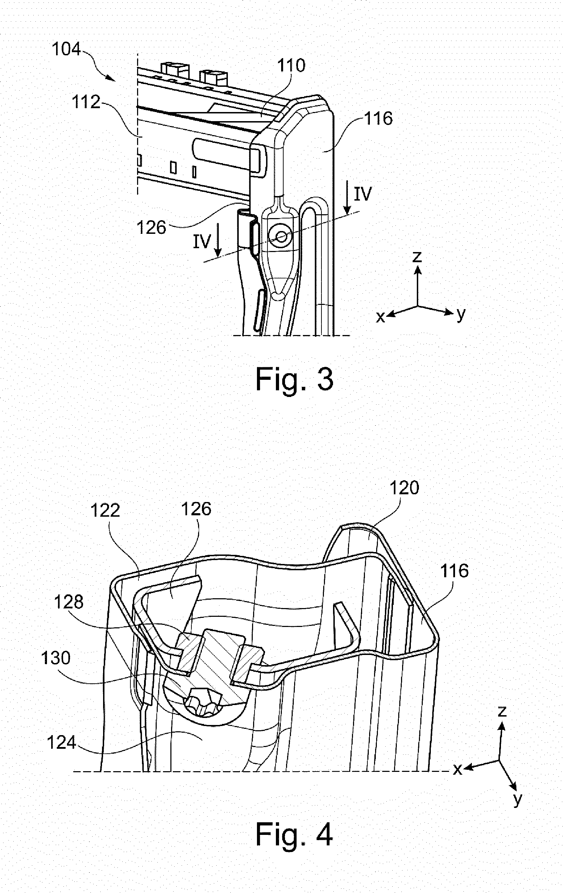

Die Figuren 3 und 4 zeigen ausschnittsweise eine Rückenlehnenstruktur 104 einer Fahrzeugsitzstruktur 100 eines zweiten Ausführungsbeispiels, bei dem ein Strukturbauteil 112 mit einem darin angeordneten Gurtautomaten 108 eine obere Quertraverse der Rückenlehnenstruktur 104 bildet. Ein erster Seitenholm 116 der beiden Seitenholme 116, 117 ist aus einem ersten Seitenholmprofil 120 und einem zweiten Seitenholmprofil 122 zusammengesetzt. Der erster Seitenholm 116 ist dadurch ein weitgehend geschlossenes Profil mit einer hohen Biegesteifigkeit, und kann daher hohe im Crashfall auf das Gurtband 110 wirkende Kräfte in Richtung der Beschläge 106 weiterleiten. Der erste Seitenholm 116 ist in Querrichtung y betrachtet auf derjenigen Seite des Strukturbauteils 112 angeordnet, aus der das Gurtband 110 austritt.

Das erste Seitenholmprofil 120 und das zweite Seitenholmprofil 122 sind miteinander verbunden, vorzugsweise miteinander verschweißt. Der erste Seitenholm 116 weist einen Hohlraum mit einem näherungsweise rechtwinkligen Querschnitt auf. Unterhalb des Strukturbauteils 112 weist der erste Seitenholm 116 eine schräg zur Längsrichtung x und schräg zur Querrichtung y verlaufende Befestigungsfläche 124 mit einem Schraubendurchgangsloch auf.

In den Hohlraum des ersten Seitenholms 116 ist von oben her ein Befestigungswinkel 126 des Strukturbauteils 112 eingeschoben. Der Befestigungswinkel 126 steht nach unten von dem Strukturbauteil 112 ab. Der Befestigungswinkel 126 ist fest mit dem Strukturbauteil 112 verbunden. Der Befestigungswinkel 126 liegt in Längsrichtung x und in Querrichtung y jeweils an einer Innenfläche des ersten Seitenholms 116 an. Der Befestigungswinkel 126 weist ein Gewinde, insbesondere eine Gewindemutter 128, auf, die mit dem Schraubendurchgangsloch der Befestigungsfläche 124 fluchtet. Eine Schraube 130, vorzugsweise mit einem Gewinde M10 oder 7/16 Zoll, durchragt das Schraubendurchgangsloch und ist in die Gewindemutter 128 eingeschraubt. Dadurch sind der Befestigungswinkel 126 und folglich das Strukturbauteil 112 mit dem ersten Seitenholm 116 verschraubt. Die Schraube 130 zieht dabei den Befestigungswinkel 126 derart in Längsrichtung x und in Querrichtung y an jeweils eine korrespondierende Innenfläche des ersten Seitenholms 116, dass der Befestigungswinkel 126 in zwei Raumrichtungen an dem ersten Seitenholm 116 anliegt.

Eine Befestigung des Strukturbauteils 112 an dem zweiten Seitenholm 117 kann in analoger Weise erfolgen. Alternativ oder zusätzlich kann das Strukturbauteil 112 formschlüssig mit dem zweiten Seitenholm 117 verbunden sein.

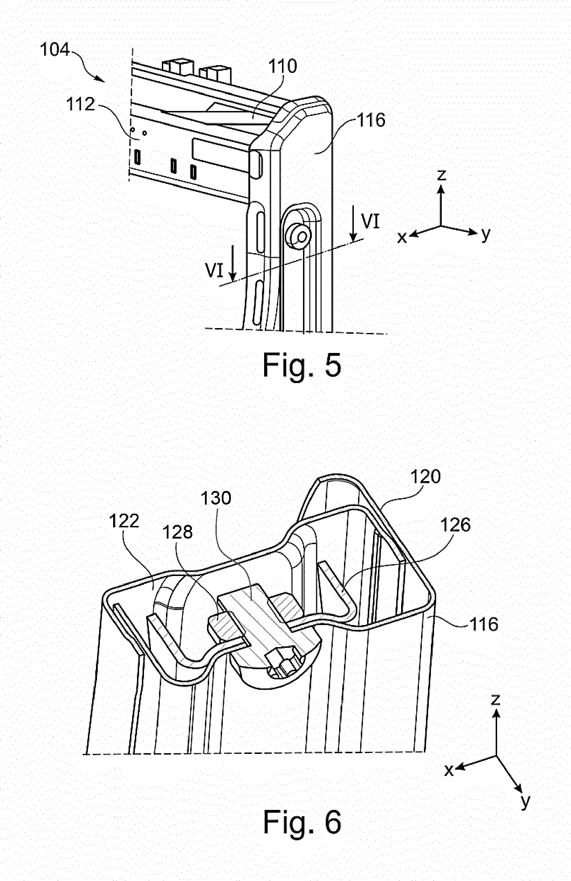

Die Figuren 5 und 6 zeigen ausschnittsweise eine Rückenlehnenstruktur 104 einer Fahrzeugsitzstruktur 100 eines dritten Ausführungsbeispiels, das bis auf die in den Figuren dargestellten und nachfolgend beschriebenen Unterschiede dem zweiten Ausführungsbeispiel entspricht. Vergleichbare Bauteile der verschiedenen Ausführungsbeispiele tragen daher gleiche Bezugszeichen. Dies gilt auch für die anderen zuvor und nachfolgend beschriebenen Ausführungsbeispiele.

Im Gegensatz zum zweiten Ausführungsbeispiel ist beim dritten Ausführungsbeispiel ein Befestigungswinkel 126 mit einer Schraube 130 verschraubt, die parallel zur Querrichtung y verläuft. Der Befestigungswinkel 126 ist dadurch gegen genau eine Innenfläche des ersten Seitenholms 116 gezogen. Dadurch liegt der Befestigungswinkel 126 in nur genau einer Raumrichtung an dem ersten Seitenholm 116 an. Während der Montage kann der Befestigungswinkel 126 in Längsrichtung x begrenzt relativ zu dem ersten Seitenholm 116 verschoben werden, bevor die Schraube 130 angezogen wird.

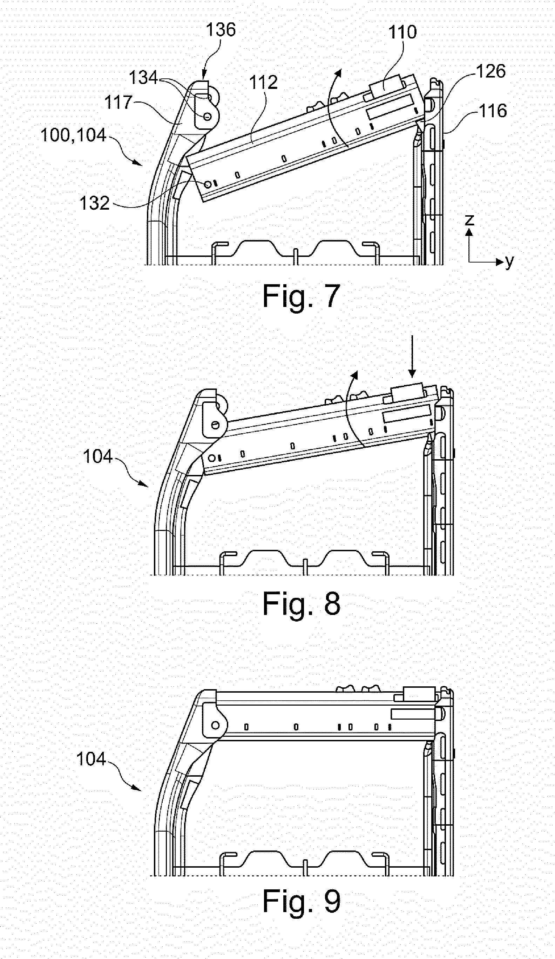

Die Figuren 7 bis 9 zeigen ausschnittsweise eine Vorderansicht einer Fahrzeugsitzstruktur 100 gemäß eines vierten Ausführungsbeispiels während der Montage einer Rückenlehnenstruktur 104, wobei ein Strukturbauteil 112 mit einem darin angeordneten Gurtautomaten annähernd um eine annähernd parallel zur Längsrichtung x verlaufende Schwenkachse relativ zu zwei Seitenholmen 116, 117 der Rückenlehnenstruktur 104 in Richtung einer Endlage geschwenkt wird. Dabei wird zunächst ein Befestigungswinkel 126 des Strukturteils 112 in einen Hohlraum eines der beiden Seitenholme 116 eingesteckt und anschließend in Richtung der Endlage des Strukturteils 112 geschwenkt. Nachdem die Endlage des Strukturteils 112 relativ zu den Seitenholmen 116, 117 erreicht ist, wird das Strukturteil 112 mittels wenigstens einer Schraube mit einem dem Befestigungswinkel 126 gegenüberliegenden Ende des Strukturteils 112 verschraubt. Dazu weist der zweite Seitenholm 117 zwei Durchgangslöcher 134 auf, die in der Endlage des Strukturteils 112 mit entsprechenden Gewinden 132 des Strukturteils 112 fluchten.

Um das zuvor beschriebene und in den Figuren 7 bis 9 dargestellte Verfahren zur Montage der Rückenlehnenstruktur 104 einer Fahrzeugsitzstruktur 100 zu ermöglichen, ist der Befestigungswinkel 126 derart in das obere Ende des ersten Seitenholms 116 einsteckbar, dass das Strukturteil 112 begrenzt um eine annähernd parallel zur Längsrichtung x verlaufende Schwenkachse schwenkbar ist.

Die oberen Bereiche der Seitenholme 116, 117 sind vorzugsweise jeweils als U-Profil ausgebildet, wobei die offenen Seiten der beiden Seitenholme 116, 117 aufeinander zu weisen. Dadurch ist das Strukturteil 112 in der zuvor beschriebenen Weise in die Seitenholme 116, 117 einschwenkbar. Wenigstens ein oberer Endbereich der Seitenholme 116, 117 kann eine Anschlagfläche 136 aufweisen, die derart ausgebildet ist, dass das Strukturteil 112 beim Erreichen der Endlage des Strukturteils 112 gegen diese Anschlagfläche 136 anläuft.

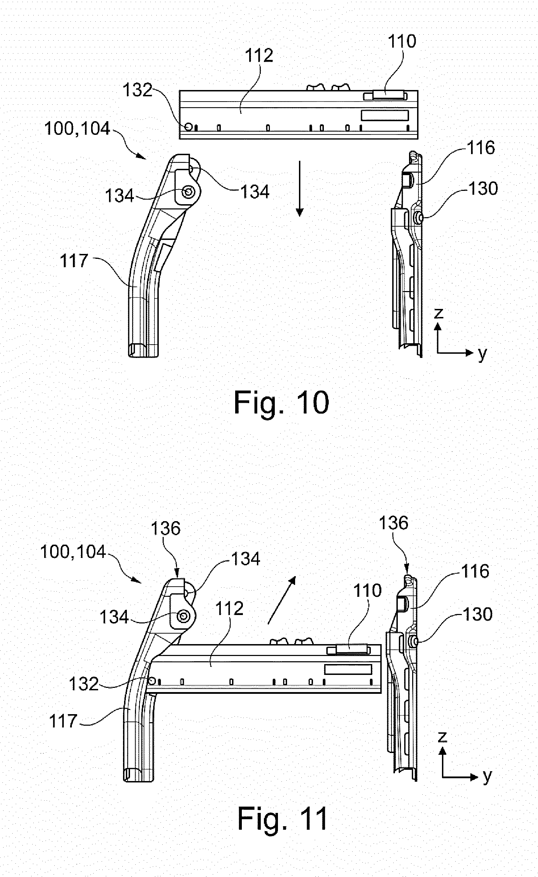

Die Figur 10 zeigt ausschnittsweise eine Vorderansicht einer Fahrzeugsitzstruktur 100 gemäß eines fünften Ausführungsbeispiels während der Montage einer Rückenlehnenstruktur 104, wobei ein Strukturbauteil 112 mit einem darin angeordneten Gurtautomaten annähernd entgegen der Vertikalrichtung von oben in zwei Seitenholme 116, 117 der Rückenlehnenstruktur 104 in Richtung einer Endlage eingeschoben wird. Nachdem die Endlage des Strukturteils 112 relativ zu den Seitenholmen 116, 117 erreicht ist, wird das Strukturteil 112 beidseitig mittels jeweils wenigstens einer Schraube verschraubt. Dazu kann das dem ersten Seitenholm 116 zugeordnete Ende des Strukturteils 112 einen in Figur 10 nicht dargestellten Befestigungswinkel aufweisen. Der zweite Seitenholm 117 kann zwei Durchgangslöcher 134 aufweisen, die in der Endlage des Strukturteils 112 mit entsprechenden Gewinden 132 des Strukturteils 112 fluchten.

Die oberen Bereiche der Seitenholme 116, 117 sind vorzugsweise jeweils als U-Profil ausgebildet, wobei die offenen Seiten der beiden Seitenholme 116, 117 aufeinander zu weisen. Dadurch ist das Strukturteil 112 in der zuvor beschriebenen Weise in die Seitenholme 116, 117 einsteckbar. Wenigstens einer der Seitenholme 116, 117 kann ein in den Figuren nicht dargestelltes Anschlagmittel aufweisen, das derart ausgebildet ist, dass das Strukturteil 112 beim Erreichen der Endlage des Strukturteils 112 gegen dieses Anschlagmittel anläuft.

Die Figur 11 zeigt ausschnittsweise eine Vorderansicht einer Fahrzeugsitzstruktur 100 gemäß eines sechsten Ausführungsbeispiels während der Montage einer Rückenlehnenstruktur 104, wobei ein Strukturbauteil 112 mit einem darin angeordneten Gurtautomaten annähernd entgegen der Vertikalrichtung von oben in zwei Seitenholme 116, 117 der Rückenlehnenstruktur 104 in Richtung einer Endlage eingeschoben wird. Nachdem die Endlage des Strukturteils 112 relativ zu den Seitenholmen 116, 117 erreicht ist, wird das Strukturteil 112 beidseitig mittels jeweils wenigstens einer Schraube verschraubt. Dazu kann das dem ersten Seitenholm 116 zugeordnete Ende des Strukturteils 112 einen in Figur 10 nicht dargestellten Befestigungswinkel aufweisen. Der zweite Seitenholm 117 kann zwei Durchgangslöcher 134 aufweisen, die in der Endlage des Strukturteils 112 mit entsprechenden Gewinden 132 des Strukturteils 112 fluchten.

Die oberen Bereiche der Seitenholme 116, 117 sind vorzugsweise jeweils als U-Profil ausgebildet, wobei die offenen Seiten der beiden Seitenholme 116, 117 aufeinander zu weisen. Dadurch ist das Strukturteil 112 in der zuvor beschriebenen Weise in die Seitenholme 116, 117 einsteckbar. Wenigstens ein oberer Endbereich der Seitenholme 116, 117 kann eine Anschlagfläche 136 aufweisen, die derart ausgebildet ist, dass das Strukturteil 112 beim Erreichen der Endlage des Strukturteils 112 gegen diese Anschlagfläche 136 anläuft.

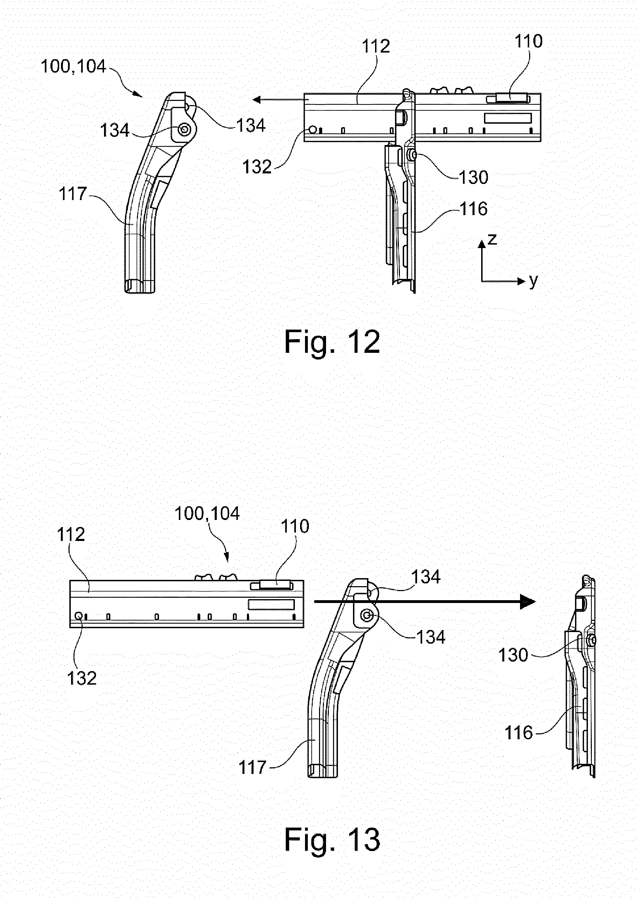

Die Figur 12 zeigt ausschnittsweise eine Vorderansicht einer Fahrzeugsitzstruktur 100 gemäß eines siebten Ausführungsbeispiels während der Montage einer Rückenlehnenstruktur 104, wobei ein Strukturbauteil 112 mit einem darin angeordneten Gurtautomaten parallel zur Querrichtung y durch eine Öffnung des ersten Seitenholms 116 in Richtung des zweiten Seitenholms 117 eingeschoben wird. In einer Endlage des Strukturbauteils 112 liegt dieses entgegen der Querrichtung y an dem zweiten Seitenholm 117 an. Nachdem die Endlage des Strukturteils 112 relativ zu den Seitenholmen 116, 117 erreicht ist, wird das Strukturteil 112 mittels wenigstens einer Schraube mit dem zweiten Seitenholm 117, vorzugsweise auch mit dem ersten Seitenholm 116, verschraubt. Der zweite Seitenholm 117 kann zwei Durchgangslöcher 134 aufweisen, die in der Endlage des Strukturteils 112 mit entsprechenden Gewinden 132 des Strukturteils 112 fluchten.

Die oberen Bereiche der Seitenholme 116, 117 sind vorzugsweise jeweils als U-Profil ausgebildet, wobei die offenen Seiten der beiden Seitenholme 116, 117 aufeinander zu weisen. Das Profil des ersten Seitenholms 116 hat zudem die Öffnung zum Durchschieben des Strukturteils 112. Dadurch ist das Strukturteil 112 in der zuvor beschriebenen Weise in die Seitenholme 116, 117 einsteckbar.

Figur 13 zeigt ausschnittsweise eine Vorderansicht einer Fahrzeugsitzstruktur 100 gemäß eines achten Ausführungsbeispiels während der Montage einer Rückenlehnenstruktur 104, wobei ein Strukturbauteil 112 mit einem darin angeordneten Gurtautomaten parallel zur Querrichtung y durch eine Öffnung des zweiten Seitenholms 117 in Richtung des ersten Seitenholms 116 eingeschoben wird. In einer Endlage des Strukturbauteils 112 liegt dieses entgegen der Querrichtung y an dem ersten Seitenholm 117 an. Nachdem die Endlage des Strukturteils 112 relativ zu den Seitenholmen 116, 117 erreicht ist, wird das Strukturteil 112 mittels wenigstens einer Schraube mit dem zweiten Seitenholm 117, vorzugsweise auch mit dem ersten Seitenholm 116, verschraubt. Der zweite Seitenholm 117 kann zwei Durchgangslöcher 134 aufweisen, die in der Endlage des Strukturteils 112 mit entsprechenden Gewinden 132 des Strukturteils 112 fluchten.

Die oberen Bereiche der Seitenholme 116, 117 sind vorzugsweise jeweils als U-Profil ausgebildet, wobei die offenen Seiten der beiden Seitenholme 116, 117 aufeinander zu weisen. Das Profil des zweiten Seitenholms 117 hat zudem die Öffnung zum Durchschieben des Strukturteils 112. Dadurch ist das Strukturteil 112 in der zuvor beschriebenen Weise in die Seitenholme 116, 117 einsteckbar.

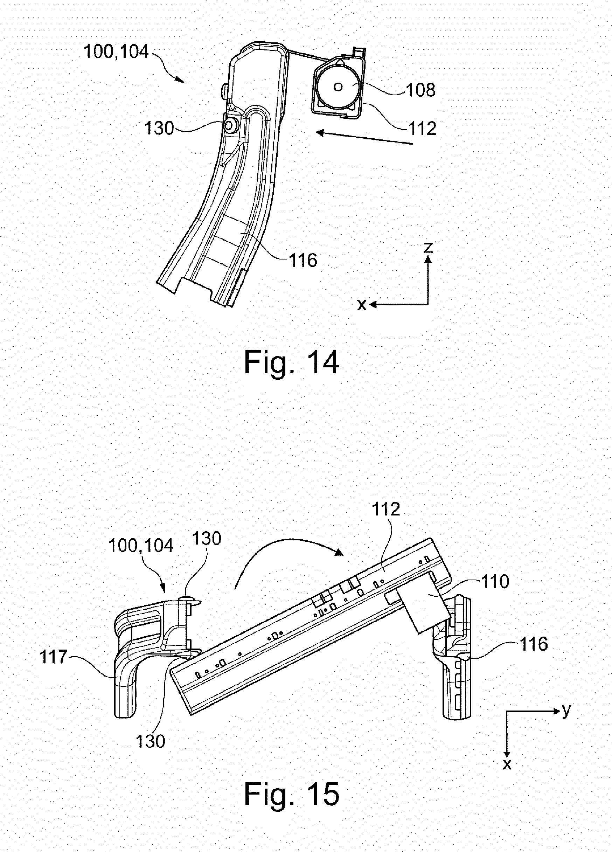

Figur 14 zeigt ausschnittsweise eine Seitenansicht einer Fahrzeugsitzstruktur 100 gemäß eines neunten Ausführungsbeispiels während der Montage einer Rückenlehnenstruktur 104, wobei ein Strukturbauteil 112 mit einem darin angeordneten Gurtautomaten 108 annähernd in Längsrichtung x in die Seitenholme 116, 117 eingeschoben wird. In einer Endlage des Strukturbauteils 112 liegt dieses in Längsrichtung x an den Seitenholmen 116, 117 an. Nachdem die Endlage des Strukturteils 112 relativ zu den Seitenholmen 116, 117 erreicht ist, wird das Strukturteil 112 mittels wenigstens einer Schraube 130 mit dem ersten Seitenholm 116, vorzugsweise auch mit dem zweiten Seitenholm 117, verschraubt.

Die oberen Bereiche der Seitenholme 116, 117 sind vorzugsweise jeweils als L-Profil ausgebildet. Die oberen Endbereiche der Seitenholme 116, 117 sind vorzugsweise wie Kofferecken ausgebildet. Dadurch ist das Strukturteil 112 in der zuvor beschriebenen Weise in die Seitenholme 116, 117 einsteckbar.

Die Figur 15 zeigt ausschnittsweise eine Ansicht von oben auf eine Fahrzeugsitzstruktur 100 gemäß eines zehnten Ausführungsbeispiels während der Montage einer Rückenlehnenstruktur 104, wobei ein Strukturbauteil 112 mit einem darin angeordneten Gurtautomaten annähernd um eine annähernd parallel zur Vertikalrichtung z verlaufende Schwenkachse relativ zu zwei Seitenholmen 116, 117 der Rückenlehnenstruktur 104 in Richtung einer Endlage geschwenkt wird. Nachdem die Endlage des Strukturteils 112 relativ zu den Seitenholmen 116, 117 erreicht ist, wird das Strukturteil 112 jeweils mittels wenigstens einer Schraube 130 mit den Seitenholmen 116, 117 verschraubt.

Die oberen Bereiche der Seitenholme 116, 117 sind vorzugsweise jeweils als L-Profil ausgebildet, wobei der erste Seitenholm 116 nach hinten geöffnet ist und der zweite Seitenholm 117 nach vorne geöffnet ist.

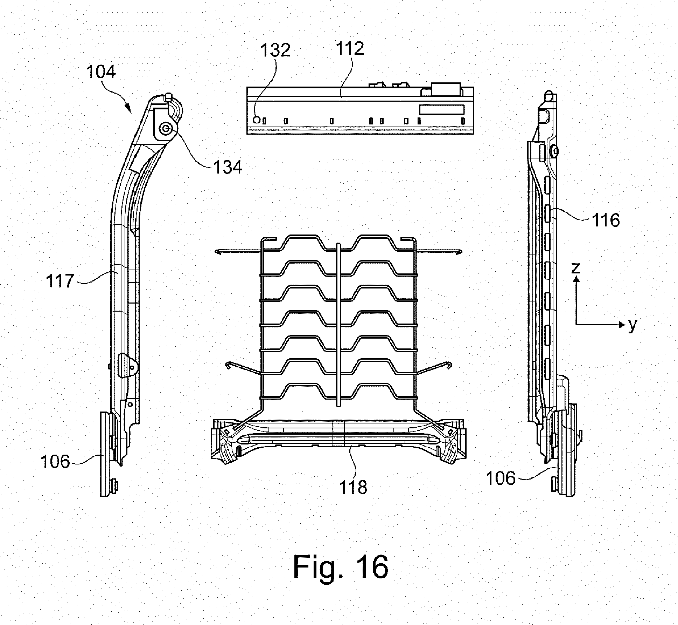

Figur 16 zeigt eine Ansicht von vorne in Explosionsdarstellung einer Rückenlehnenstruktur 104 einer Fahrzeugsitzstruktur gemäß eines elften Ausführungsbeispiels während der Montage der Rückenlehnenstruktur 104. Ein erster Seitenholm 116 und ein zweiter Seitenholm 117 werden in bzw. entgegen der Querrichtung y aufeinander zu bewegt und nehmen dabei ein Strukturbauteil 112 mit einem darin angeordneten Gurtautomaten auf und eine untere Quertraverse 118 auf.

Nachdem die Endlage der Seitenholme 116, 117 relativ zu dem Strukturteil 112 erreicht ist, wird das Strukturteil 112 mittels jeweils wenigstens einer Schraube mit den Seitenholmen 116, 117 verschraubt. Der zweite Seitenholm 117 und vorzugsweise auch der erste Seitenholm 116 können jeweils wenigstens ein Durchgangsloch 134 aufweisen, das in der Endlage des Strukturteils 112 mit entsprechenden Gewinden 132 des Strukturteils 112 fluchtet.

Die oberen Bereiche der Seitenholme 116, 117 sind vorzugsweise jeweils als U-Profil ausgebildet, wobei die offenen Seiten der beiden Seitenholme 116, 117 aufeinander zu weisen.

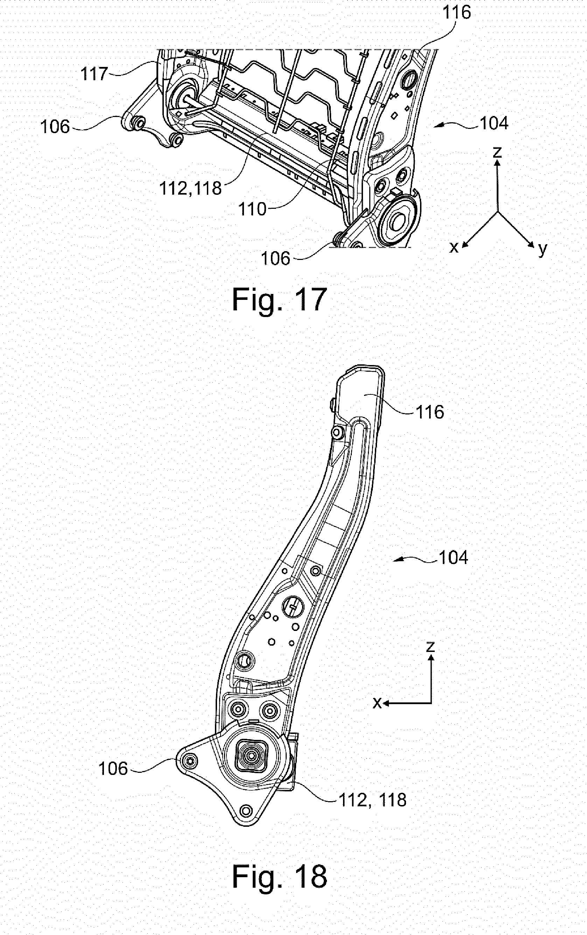

Die Figuren 17 und 18 zeigen eine Rückenlehnenstruktur 104 einer Fahrzeugsitzstruktur gemäß eines zwölften Ausführungsbeispiels, bei dem ein Strukturbauteil 112 mit einem darin angeordneten Gurtautomaten eine untere Quertraverse 118 der Rückenlehnenstruktur 104 bildet.

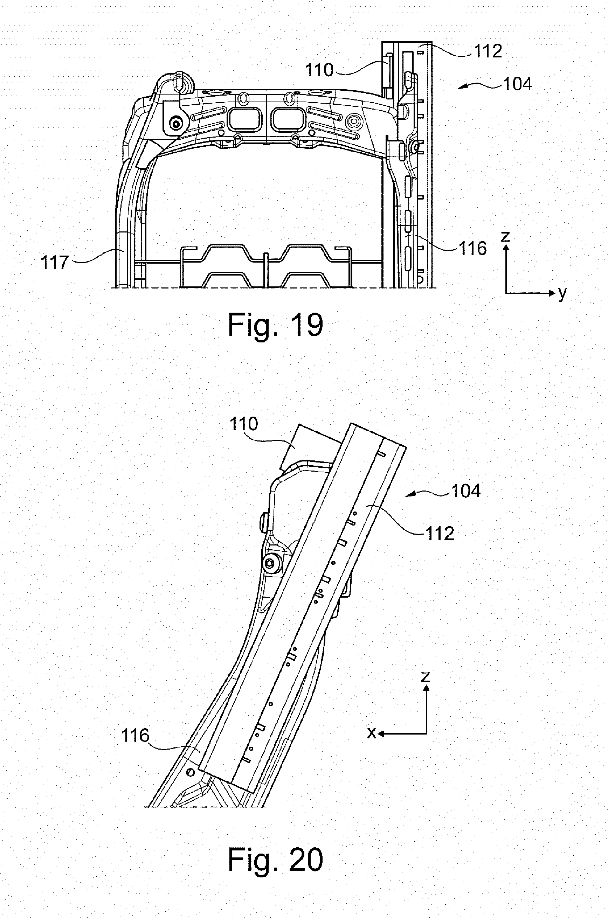

Die Figuren 19 und 20 zeigen eine Rückenlehnenstruktur 104 einer Fahrzeugsitzstruktur gemäß eines dreizehnten Ausführungsbeispiels, bei dem ein Strukturbauteil 112 mit einem darin angeordneten Gurtautomaten einen Teil eines ersten Seitenholms 116 der Rückenlehnenstruktur 104 bildet. Ein Gurtband 110 ist entsprechend umgelenkt.

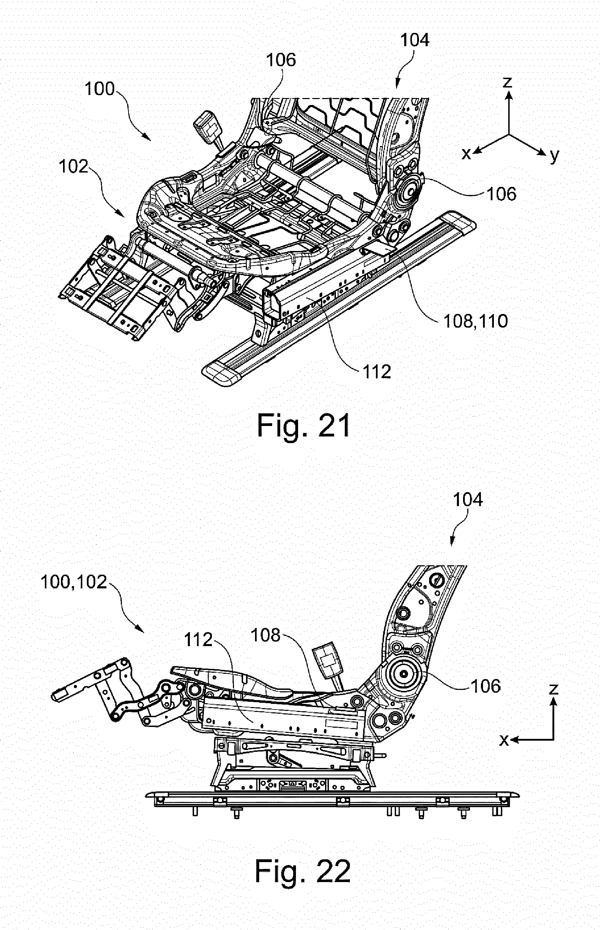

Die Figuren 21 und 22 zeigen eine Sitzunterbaustruktur 102 einer Fahrzeugsitzstruktur 100 gemäß eines erfindungsgemäßen vierzehnten Ausführungsbeispiels, bei dem ein Strukturbauteil 112 mit einem darin angeordneten Gurtautomaten ein Sitzrahmenseitenteil als einen Teil der Sitzunterbaustruktur 102 bildet. Der Gurtautomat kann insbesondere einen Beckengurt eines Sicherheitsgurtsystems, insbesondere eines 3-Punkt-Gurtsystems, aufrollen. Das Sicherheitsgurtsystem kann zudem einen zweiten Gurtautomaten im Bereich der Rückenlehne 104 aufweisen.

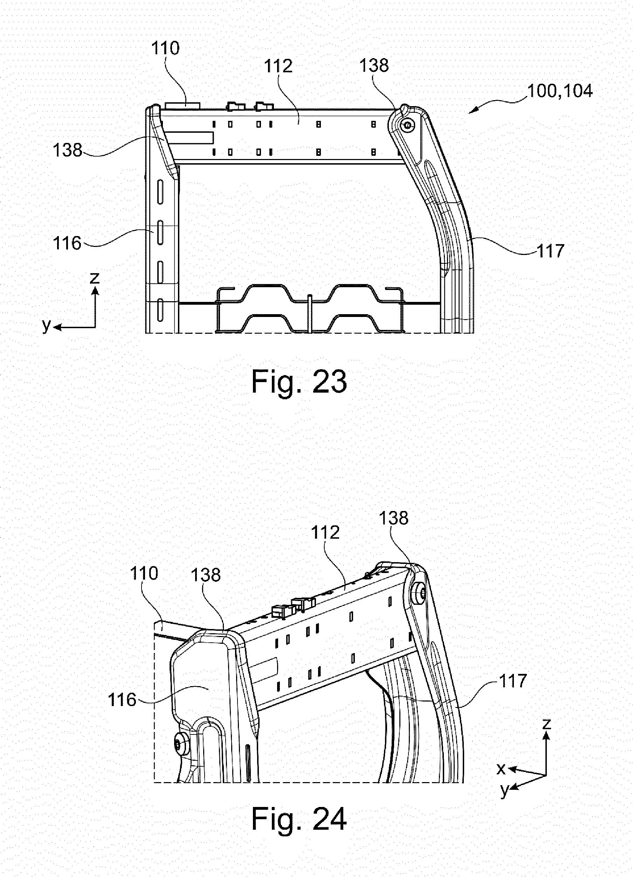

Die Figuren 23 und 24 zeigen eine Rückansicht einer Rückenlehnenstruktur 104 einer Fahrzeugsitzstruktur 100 gemäß eines fünfzehnten Ausführungsbeispiels, bei dem ein Strukturbauteil 112 mit einem darin angeordneten Gurtautomaten eine obere Quertraverse der Rückenlehnenstruktur 104 bildet. Die Rückenlehnenstruktur 104 weist einen ersten Seitenholm 116 und einen zweiten Seitenholm 117 auf. Die Kanten der Seitenholme 116, 117 sind zumindest teilweise und abschnittsweise verrundet, um die gesetzlichen Kopfaufschlagprüfungen erfüllen zu können. Insbesondere nach hinten weisenden Kanten der Seitenholme 116, 117 weisen Verrundungen 138 auf. Die Verrundungen können einen halbkreisförmigen Querschnitt haben. Die Verrundungen können einen polygonförmigen Querschnitt haben. Die Verrundungen können einen Querschnitt haben, der sich durch ein Polynom annähern lässt.

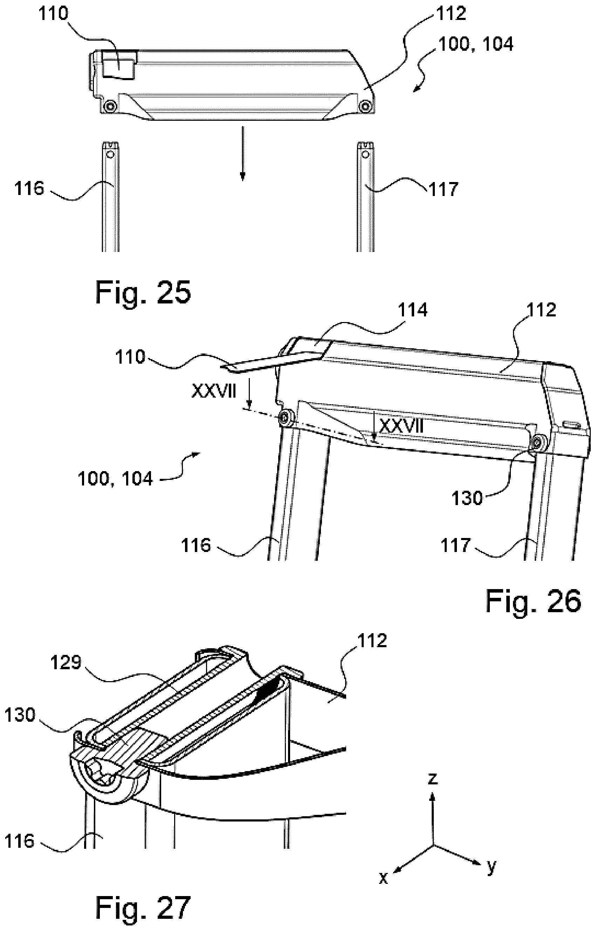

Die Figuren 25 bis 27 zeigen eine Fahrzeugsitzstruktur 100 gemäß eines sechzehnten Ausführungsbeispiels. Die Figur 25 zeigt die Fahrzeugsitzstruktur 100 während der Montage einer Rückenlehnenstruktur 104, wobei ein Strukturbauteil 112 mit einem darin angeordneten Gurtautomaten annähernd entgegen der Vertikalrichtung z von oben auf zwei Seitenholme 116, 117 der Rückenlehnenstruktur 104 in Richtung einer Endlage aufgeschoben wird. Dazu weisen die oberen Endbereiche der Seitenholme 116, 117 vorzugsweise jeweils einen rechteckigen Querschnitt auf. Das Strukturbauteil 112 weist in Querrichtung y betrachtet beidseitig jeweils eine Öffnung auf, in die die Endbereiche der Seitenholme 116, 117 aufgenommen werden und im montierten Zustand der Fahrzeugsitzstruktur 100 aufgenommen sind.

Dadurch sind die Endbereiche der Seitenholme 116, 117 in das Strukturteil 112 einsteckbar. Wenigstens einer der Seitenholme 116, 117 kann ein in den Figuren nicht dargestelltes Anschlagmittel aufweisen, das derart ausgebildet ist, dass das Strukturteil 112 beim Erreichen der Endlage des Strukturteils 112 gegen dieses Anschlagmittel anläuft.

Nachdem die in Fig 26 dargestellte Endlage des Strukturteils 112 relativ zu den Seitenholmen 116, 117 erreicht ist, wird das Strukturteil 112 beidseitig mittels jeweils wenigstens einer Schraube 130 verschraubt. Fig. 27 zeigt einen Schnitt durch eine der beiden Schraubverbindung, und zwar diejenige zwischen dem ersten Seitenholm 116 und dem Strukturteil 112. Eine gegenüberliegende Schraubverbindung zwischen dem zweiten Seitenholm 117 und dem Strukturteil 112 ist analog, vorzugsweise spiegelsymmetrisch zur in Fig. 27 dargestellten Schraubverbindung.

Der Seitenholm 116 und das Strukturteil 112 weisen jeweils zwei Durchgangslöcher auf, die miteinander fluchten. In der Endlage des Strukturteils 112 fluchten die Durchgangslöcher des Seitenholms 116 mit den zugeordneten Durchgangslöchern des Strukturteils 112. Eine Gewindehülse 129 mit einem Bund und einem Innengewinde ist durch die miteinander fluchtender Durchgangslöcher soweit in das Strukturteil 112 und den Seitenholm 116 eingeschoben, dass der Bund der Gewindehülse 129 außen an dem Strukturteil 112 anliegt. Eine von dem Bund der Gewindehülse 129 abgewandte Stirnseite der Gewindehülse 129 liegt vorzugsweise innen an dem Seitenholm 116 an. Von der dem Bund der Gewindehülse 129 abgewandten Seite des Strukturteil 112 durchläuft die Schraube 130 die beiden anderen Durchgangslöcher in dem Strukturteil 112 und dem Seitenholm 116 und ist in das Innengewinde der Gewindehülse 129 eingeschraubt. Ein Schraubenkopf der Schraube 130 liegt an dem Strukturteil 112 an. Dadurch ist das Strukturteil 112 mit dem Seitenholm 116 fest verbunden.

In einer Abwandlung des sechzehnten Ausführungsbeispiels ist wenigstens eine Gewindehülse 129 durch eine Gewindemutter ersetzt. In einer weiteren Abwandlung des sechzehnten Ausführungsbeispiels ist wenigstens eine Schraubverbindung durch eine Nietverbindung ersetzt. In einer weiteren Abwandlung des sechzehnten Ausführungsbeispiels ist wenigstens eine Schraubverbindung durch eine Schweißverbindung ersetzt. In einer weiteren Abwandlung des sechzehnten Ausführungsbeispiels ist wenigstens eine Schraubverbindung durch eine Klebverbindung ersetzt.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein.

Obwohl die Erfindung in den Figuren und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 100: Fahrzeugsitzstruktur
- 102: Sitzunterbaustruktur
- 104: Rückenlehnenstruktur
- 106: Beschlag
- 108: Gurtautomat
- 110: Gurtband
- 112: Strukturbauteil
- 114: Hohlraum
- 116: erster Seitenholm
- 117: zweiter Seitenholm
- 118: untere Quertraverse
- 120: erstes Seitenholmprofil
- 122: zweites Seitenholmprofil
- 124: Befestigungsfläche
- 126: Befestigungswinkel
- 128: Gewindemutter
- 129: Gewindehülse
- 130: Schraube
- 132: Gewinde
- 134: Durchgangsloch
- 136: Anschlagfläche
- 138: Verrundung
- x: Längsrichtung
- y: Querrichtung
- z: Vertikalrichtung

## Patentansprüche

1. Fahrzeugsitzstruktur (100) für einen Fahrzeugsitz, mit einem einen Gurtautomaten (108) aufweisenden Strukturbauteil (112), wobei der Gurtautomat (108) in einem Hohlraum (114) des Strukturbauteils (112) angeordnet ist, und das Strukturbauteil (112) formschlüssig und/oder stoffschlüssig und/oder kraftschlüssig mit wenigstens einem weiteren Bauteil der Fahrzeugsitzstruktur (100) verbunden ist, wobei die Fahrzeugsitzstruktur (100) eine Sitzunterbaustruktur (102) aufweist, wobei das den Gurtautomaten (108) aufweisende Strukturbauteil (112) ein Bauteil der Sitzunterbaustruktur (102) bildet, **dadurch gekennzeichnet, dass** das den Gurtautomaten (108) aufweisende Strukturbauteil (112) ein Sitzrahmenseitenteil der Sitzunterbaustruktur (102) bildet.

2. Fahrzeugsitzstruktur (100) nach Anspruch 1, **dadurch gekennzeichnet, dass** in dem Strukturbauteil (112) ein Gurtautomat (108) zum Aufrollen eines Beckengurtes eines Gurtsystems angeordnet ist.

3. Fahrzeugsitzstruktur (100) nach Anspruch 2, **dadurch gekennzeichnet, dass** das Gurtsystem als ein 3-Punkt-Gurtsystem ausgebildet ist.

4. Fahrzeugsitzstruktur (100) nach Anspruch 2 oder 3, **dadurch gekennzeichnet, dass** das Gurtsystem ein Sicherheitsgurtsystem ist.

5. Fahrzeugsitzstruktur (100) nach einem der Ansprüche 2 bis 4, **dadurch gekennzeichnet, dass** das Gurtsystem einen zweiten Gurtautomaten im Bereich einer Rückenlehne (104) aufweist.

6. Fahrzeugsitzstruktur (100) nach einem der Ansprüche 2 bis 5, **dadurch gekennzeichnet, dass** die Fahrzeugsitzstruktur (100) sowohl ein Strukturbauteil (112) mit einen Gurtautomaten zum Aufrollen eines Beckengurtes eines Gurtsystems aufweist, als auch ein weiteres Strukturbauteil mit einen Gurtautomaten zum Aufrollen eines Schultergurtes aufweist.

7. Fahrzeugsitzstruktur (100) nach Anspruch 6, **dadurch gekennzeichnet, dass** die beiden Gurtautomaten Bestandteil genau eines 3-Punkt-Gurtsystems sind.

8. Verfahren zur Montage einer Fahrzeugsitzstruktur (100) nach einem der vorstehenden Ansprüche, **dadurch gekennzeichnet, dass** in einem Verfahrensschritt das den Gurtautomaten (108) aufweisende Strukturbauteil (112) und wenigstens ein weiteres Bauteil der Fahrzeugsitzstruktur (100) relativ zueinander verschoben und/oder gedreht werden, so dass das Strukturbauteil (112) und das wenigstens eine weitere Bauteil der Fahrzeugsitzstruktur (100) eine Endlage zueinander einnehmen, und in einem weiteren Verfahrensschritt miteinander formschlüssig und/oder stoffschlüssig und/oder kraftschlüssig verbunden werden.

9. Verfahren nach Anspruch 8, **dadurch gekennzeichnet, dass** das den Gurtautomaten (108) aufweisende Strukturbauteil (112) eine prüffähige Einheit ist, deren Funktion vor der Verbindung des den Gurtautomaten (108) aufweisenden Strukturbauteils (112) mit dem wenigstens einen weiteren Bauteil der Sitzunterbaustruktur (102) überprüft wird.

10. Verfahren nach Anspruch 9, **dadurch gekennzeichnet, dass** die Funktion des Gurtautomaten (108) überprüft wird.

11. Verfahren nach einem der Ansprüche 8 bis 10, **dadurch gekennzeichnet, dass** das den Gurtautomaten (108) aufweisende Strukturbauteil (112) um eine Schwenkachse in die Endlage geschwenkt wird.

12. Verfahren nach Anspruch 11, **dadurch gekennzeichnet, dass** zunächst ein Abschnitt des den Gurtautomaten (108) aufweisenden Strukturteils (112) an einem weiteren Bauteil der Sitzunterbaustruktur (102) angesetzt oder in ein weiteres Bauteil der Sitzunterbaustruktur (102) eingesteckt wird, wodurch die Schwenkachse gebildet wird, und anschließend das den Gurtautomaten (108) aufweisende Strukturteil (112) um diese Schwenkachse in eine Endlage geschwenkt und in dieser Endlage mit einem weiteren Bauteil der Sitzunterbaustruktur (102) verbunden wird.

13. Verfahren nach Anspruch 12, **dadurch gekennzeichnet, dass** ein Befestigungswinkel des den Gurtautomaten (108) aufweisenden Strukturteils (112), an einem weiteren Bauteil der Sitzunterbaustruktur (102) angesetzt oder in ein weiteres Bauteil der Sitzunterbaustruktur (102) eingesteckt wird

14. Verfahren nach Anspruch 12 oder 13, **dadurch gekennzeichnet, dass** die Fahrzeugsitzstruktur (100) ein Anschlagmittel aufweist, wobei das den Gurtautomaten (108) aufweisende Strukturteil (112) beim Erreichen der Endlage gegen das Anschlagmittel anläuft.

## Claims

1. Vehicle-seat structure (100) for a vehicle seat, having a structural component (112) which has an automatic belt mechanism (108), wherein the automatic belt mechanism (108) is arranged in a cavity (114) of the structural component (112), and the structural component (112) is connected in a form-fitting and/or materially bonded and/or force-fitting manner to at least one further component of the vehicle-seat structure (100), wherein the vehicle-seat structure (100) has a seat substructure (102), wherein the structural component (112) having the automatic belt mechanism (108) forms a component of the seat substructure (102), **characterized in that** the structural component (112) having the automatic belt mechanism (108) forms a seat-frame side part of the seat substructure (102).

2. Vehicle-seat structure (100) according to Claim 1, **characterized in that** an automatic belt mechanism (108) for winding up a lap belt of a belt system is arranged in the structural component (112).

3. Vehicle-seat structure (100) according to Claim 2, **characterized in that** the belt system is designed as a 3-point belt system.

4. Vehicle-seat structure (100) according to Claim 2 or 3, **characterized in that** the belt system is a safety-belt system.

5. Vehicle-seat structure (100) according to one of Claims 2 to 4, **characterized in that** the belt system has a second automatic belt mechanism in the region of a backrest (104).

6. Vehicle-seat structure (100) according to one of Claims 2 to 5, **characterized in that** the vehicle-seat structure (100) has both a structural component (112) with an automatic belt mechanism for winding up a lap belt of a belt system and a further structural component with an automatic belt mechanism for winding up a shoulder belt.

7. Vehicle-seat structure (100) according to Claim 6, **characterized in that** the two automatic belt mechanisms are a constituent part of precisely one 3-point belt system.

8. Method for assembling a vehicle-seat structure (100) according to one of the preceding claims, **characterized in that** the structural component (112) having the automatic belt mechanism (108) and at least one further component of the vehicle-seat structure (100), in one method step, are displaced and/or rotated relative to one another so that the structural component (112) and the at least one further component of the vehicle-seat structure (100) assume an end position in relation to one another and, in a further method step, are connected in a form-fitting and/or materially bonded and/or force-fitting manner to one another.

9. Method according to Claim 8, **characterized in that** the structural component (112) having the automatic belt mechanism (108) is a testable unit, the functioning of which is checked before the connection of the structural component (112) having the automatic belt mechanism (108) to the at least one further component of the seat substructure (102).

10. Method according to Claim 9, **characterized in that** the functioning of the automatic belt mechanism (108) is checked.

11. Method according to one of Claims 8 to 10, **characterized in that** the structural component (112) having the automatic belt mechanism (108) is pivoted about a pivot axis into the end position.

12. Method according to Claim 11, **characterized in that** firstly a portion of the structural component (112) having the automatic belt mechanism (108) is attached to a further component of the seat substructure (102) or is plugged into a further component of the seat substructure (102), whereby the pivot axis is formed, and subsequently the structural component (112) having the automatic belt mechanism (108) is pivoted about this pivot axis into an end position and connected in this end position to a further component of the seat substructure (102).

13. Method according to Claim 12, **characterized in that** a fastening bracket of the structural component (112) having the automatic belt mechanism (108) is attached to a further component of the seat substructure (102) or plugged into a further component of the seat substructure (102).

14. Method according to Claim 12 or 13, **characterized in that** the vehicle-seat structure (100) has a stop means, wherein, upon reaching the end position, the structural component (112) having the automatic belt mechanism (108) runs against the stop means.

## Revendications

1. Structure (100) de siège de véhicule pour un siège de véhicule, comprenant un élément de structure (112) présentant un automate de ceinture (108), l'automate de ceinture (108) étant agencé dans un espace creux (114) de l'élément de structure (112), et l'élément de structure (112) étant relié par engagement par complémentarité de formes et/ou par matière et/ou par force à au moins un autre élément de la structure (100) de siège de véhicule, la structure (100) de siège de véhicule présentant une structure inférieure (102) de siège, l'élément de structure (112) qui présente l'automate de ceinture (108) formant un composant de la structure inférieure (102) de siège, **caractérisée en ce que** l'élément de structure (112) présentant l'automate de ceinture (108) forme une partie latérale d'ossature de siège de la structure inférieure (102) de siège.

2. Structure (100) de siège de véhicule selon la revendication 1, **caractérisée en ce qu'**un automate de ceinture (108) est agencé dans l'élément de structure (112) pour enrouler une ceinture abdominale d'un système de ceinture.

3. Structure (100) de siège de véhicule selon la revendication 2, **caractérisée en ce que** le système de ceinture est conçu sous la forme d'un système de ceinture à 3 points.

4. Structure (100) de siège de véhicule selon la revendication 2 ou la revendication 3, **caractérisée en ce que** le système de ceinture est un système de ceinture de sécurité.

5. Structure (100) de siège de véhicule selon l'une des revendications 2 à 4, **caractérisée en ce que** le système de ceinture présente un deuxième automate de ceinture dans la zone d'un dossier (104).

6. Structure (100) de siège de véhicule selon l'une des revendications 2 à 5, **caractérisée en ce que** la structure (100) de siège de véhicule présente à la fois un élément de structure (112) avec un automate de ceinture pour l'enroulement d'une ceinture abdominale d'un système de ceinture, et un autre élément de structure avec un automate de ceinture pour l'enroulement d'une ceinture d'épaule.

7. Structure (100) de siège de véhicule selon la revendication 6, **caractérisée en ce que** les deux automates de ceinture font exactement partie d'un système de ceinture à 3 points.

8. Procédé de montage d'une structure (100) de siège de véhicule selon l'une des revendications précédentes, **caractérisé en ce que**, dans une étape du procédé, l'élément de structure (112) présentant l'automate de ceinture (108) et au moins un autre élément de la structure (100) de siège de véhicule sont déplacés et/ou tournés l'un par rapport à l'autre, de sorte que l'élément de structure (112) et ledit au moins un autre élément de la structure (100) de siège de véhicule prennent une position finale l'un par rapport à l'autre, et sont, dans une autre étape du procédé, reliés l'un à l'autre par complémentarité de formes et/ou par matière et/ou par force.

9. Procédé selon la revendication 8, **caractérisé en ce que** l'élément de structure (112) présentant l'automate de ceinture (108) est une unité contrôlable dont le fonctionnement est vérifié avant la liaison de l'élément de structure (112) présentant l'automate de ceinture (108) avec ledit au moins un autre élément de la structure inférieure (102) de siège.

10. Procédé selon la revendication 9, **caractérisé en ce que** le fonctionnement de l'automate de ceinture (108) est vérifié.

11. Procédé selon l'une des revendications 8 à 10, **caractérisé en ce que** l'élément de structure (112) comprenant le dispositif automatique de ceinture (108) est pivoté autour d'un axe de pivotement vers la position finale.

12. Procédé selon la revendication 11, **caractérisé en ce que** tout d'abord une portion de l'élément de structure (112) présentant l'automate de ceinture (108) est placée sur un autre élément de la structure inférieure (102) de siège ou est insérée dans un autre élément de la structure inférieure (102) de siège, ce qui forme l'axe de pivotement, et ensuite l'élément de structure (112) présentant l'automate de ceinture (108) est pivoté autour de cet axe de pivotement dans une position finale et est relié dans cette position finale à un autre élément de la structure inférieure (102) de siège.

13. Procédé selon la revendication 12, **caractérisé en ce qu'**une équerre de fixation de la partie de structure (112) présentant l'automate de ceinture (108) est placée sur un autre composant de la structure inférieure (102) de siège ou est insérée dans un autre composant de la structure inférieure (102) de siège.

14. Procédé selon la revendication 12 ou la revendication 13, **caractérisé en ce que** la structure (100) de siège de véhicule présente un moyen de butée, la partie de structure (112) présentant l'automate de ceinture (108) venant buter contre le moyen de butée lorsque la position finale est atteinte.
